# EUROPEAN PATENT APPLICATION

(11) **EP 4 847 304 A1**
(43) Date of publication of application: **02.12.2026**
(21) Application number: 26161748.4
(22) Date of filing: 02.03.2026
(51) Int. Cl.: B60L 58/12, B60L 3/12, B60L 53/14, B60L 53/50, B60L 53/53, B60L 53/62, B60L 53/66, B60L 58/16, B60L 58/24, B60L 58/26, B60L 58/27, H01M 10/44, H01M 10/48, H01M 10/60, H01M 10/625

(54) **VEHICLE**

(30) Priority: 28.05.2025 JP 2025089027
(71) Applicant: Toyota Jidosha Kabushiki Kaisha, Toyota-shi, Aichi-ken 471-8571 (JP)
(72) Inventor: INTO, Shun, Toyota-shi, Aichi-ken, 471-8571 (JP)
(74) Representative: Winter, Brandl - Partnerschaft mbB

(57) **Abstract**

A vehicle includes a power storage device, an adjusting device for adjusting temperature of the power storage device, a voltage sensor for detecting voltage of the power storage device, and a control device that executes calculation processing to calculate full charge capacity of the power storage device. The calculation processing includes charging the power storage device to a first voltage while performing temperature regulation control to maintain temperature of the power storage device at predetermined temperature by the adjusting device, discharging the power storage device to a second voltage while performing the temperature regulation control, after charging the power storage device to the first voltage, acquiring, from the voltage sensor, post-discharge voltage of the power storage device when a predetermined amount of time elapsed since the power storage device was discharged to the second voltage, and calculating full charge capacity of the power storage device based on the post-discharge voltage.

## Description

### BACKGROUND OF THE INVENTION

### 1. Field of the Invention

The present disclosure relates to a vehicle.

### 2. Description of Related Art

Japanese Unexamined Patent Application Publication No. 2024-155025 (JP 2024-155025 A) discloses estimating a capacity retention rate (deterioration level) of a lithium-ion battery based on a map that defines a relation between a polarization amount and capacity retention rate of the battery, and the polarization amount of the battery (power storage device) detected when external charging is performed.

### SUMMARY OF THE INVENTION

Generally, a method for calculating a full charge capacity of a power storage device installed in a vehicle is known, in which a full charge capacity of the power storage device is calculated based on a state of the power storage device, such as, for example, voltage, current, State of Charge (SOC), polarization amount, and so forth. However, calculation precision of the full charge capacity of the power storage device can decrease due to various factors, such as the environment when the state of the power storage device is measured, and so forth.

The present disclosure has been made to solve the above problem, and an object of the present disclosure is to improve calculation precision of full charge capacity of a power storage device.
(1) A vehicle according to an aspect of the present disclosure includes a power storage device, an adjusting device for adjusting a temperature of the power storage device, a voltage sensor for detecting a voltage of the power storage device, and a control device that executes calculation processing to calculate a full charge capacity of the power storage device. The calculation processing includes charging the power storage device to a first voltage while performing temperature regulation control to maintain the temperature of the power storage device at a predetermined temperature by the adjusting device, discharging the power storage device to a second voltage while performing the temperature regulation control, after charging the power storage device to the first voltage, acquiring, from the voltage sensor, a post-discharge voltage that is a voltage of the power storage device when a predetermined amount of time elapsed since the power storage device was discharged to the second voltage, and calculating the full charge capacity of the power storage device based on the post-discharge voltage.
(2) In the vehicle according to (1) above, the first voltage is a voltage of the power storage device when the power storage device is in a fully charged state.
(3) In the vehicle according to (1) or (2) above, the calculating of the full charge capacity of the power storage device in the calculation processing includes calculating an integrated value of a discharge current of the power storage device over a period from start to end of discharging when the power storage device is discharged to the second voltage while performing the temperature regulation control, in the calculation processing, and calculating the full charge capacity of the power storage device based on the first voltage, the post-discharge voltage, and the integrated value.
(4) The vehicle according to (1) or (2) above is configured to be connectable to a power supply facility that is connected to a stationary power storage device. Charging the power storage device to the first voltage in the calculation processing includes charging the power storage device using power supplied from the power supply facility. Discharging the power storage device to the second voltage in the calculation processing includes discharging the power storage device to the stationary power storage device.
(5) In the vehicle according to (1) or (2) above, the control device further executes charging control to limit charging power to the power storage device, such that the charging power to the power storage device does not exceed an upper limit value that is set in advance. The control device lowers the upper limit value of charging power as time that elapsed since the calculation processing was executed becomes longer.

According to the present disclosure, calculation precision of full charge capacity of the power storage device can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically illustrating an overall configuration of a vehicle according to an embodiment;
FIG. 2 is a flowchart showing calculation processing executed by an ECU 800; and
FIG. 3 is a diagram showing changes in an upper limit value of charging power used in charging control.

### DETAILED DESCRIPTION OF EMBODIMENTS

An embodiment and modifications of the present disclosure will be described in detail below with reference to the drawings. Note that the same or corresponding portions are denoted by the same signs throughout the drawings, and description thereof will not be repeated.

### Embodiment

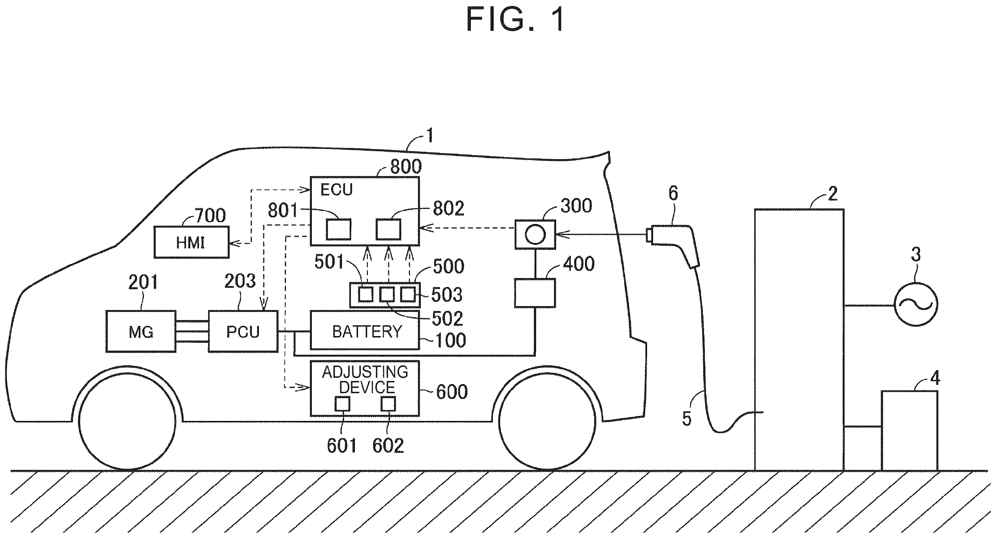

FIG. 1 is a diagram schematically illustrating an overall configuration of a vehicle according to an embodiment. In the present embodiment, the vehicle 1 is a battery electric vehicle (BEV). The vehicle 1 is configured to be capable of "plug-in charging", in which a battery 100 is charged using power supplied from an external power source (e.g., external power source 3) provided outside of the vehicle 1. In the present embodiment, the vehicle 1 is capable of standard charging, in which the battery 100 is charged using power supplied from the external power source 3. Note that it is sufficient for the vehicle 1 to be configured capable of plug-in charging, and the vehicle 1 may be a plug-in hybrid electric vehicle (PHEV).

The vehicle 1 includes the battery 100, a motor generator (MG) 201, a power control unit (PCU) 203, an inlet 300, an alternating current (AC)/direct current (DC) converter 400, a monitoring unit 500, an adjusting device 600, a human-machine interface (HMI) device 700, and an electronic control unit (ECU) 800. The vehicle 1 is configured to be capable of traveling using the power of the battery 100.

The battery 100 is an example of "power storage device" in the present disclosure. The battery 100 stores power for driving the MG 201 and supplies the power to the MG 201 through the PCU 203. The battery 100 is a battery pack including a plurality of cells (omitted from illustration). Each of the cells is a secondary battery such as, for example, a lithium-ion battery, a nickel metal hydride battery, or the like.

The MG 201 generates a driving force for the vehicle 1 to travel. The MG 201 functions both as an electric motor that causes the vehicle 1 to travel using power from the battery 100, and as a generator that generates power (e.g., regenerative power) for charging the battery 100. The PCU 203 converts power between the battery 100 and the MG 201. The PCU 203 drives the MG 201 using the power supplied from the battery 100. The PCU 203 supplies the power generated by regenerative power generation at the MG 201 to the battery 100.

The inlet 300 is configured such that a connector 6 provided at one end of a cable 5 can be inserted therein. The other end of the cable 5 is connected to a power supply facility 2 provided outside the vehicle 1. That is to say, the vehicle 1 is configured to be electrically connectable to the power supply facility 2 via the cable 5 and the connector 6. The power supply facility 2 is connected to the external power source 3 (e.g., system power source) and a stationary power storage device 4 provided outside of the vehicle 1. The power supply facility 2 supplies power from the external power source 3 to the vehicle 1 to charge the battery 100, supplies power from the battery 100 to the stationary power storage device 4 to discharge the battery 100, and so forth.

The AC/DC converter 400 converts alternating current power supplied from the external power source 3 via the inlet 300 into direct current power, and outputs the direct current power to the battery 100. Also, the AC/DC converter 400 converts direct current power supplied from the battery 100 into alternating current power, and outputs the alternating current power to the inlet 300.

The monitoring unit 500 includes a voltage sensor 501, a current sensor 502, and a temperature sensor 503. The voltage sensor 501 detects voltage of the battery 100. The current sensor 502 detects current input to and output from the battery 100. The temperature sensor 503 detects temperature of the battery 100. Each of the sensors outputs detection results thereof to the ECU 800.

The adjusting device 600 adjusts the temperature of the battery 100 in accordance with control signals from the ECU 800. The adjusting device 600 includes a heating device 601 that heats the battery 100 and a cooling device 602 that cools the battery 100. The heating device 601 includes, for example, an electric heater. The cooling device 602 includes, for example, a cooling fan. Note that the cooling device 602 may include a radiator that is capable of performing heat exchange, a medium (e.g., a coolant or a gas), a pump for pumping the medium, and a channel through which the medium flows.

The HMI device 700 includes an input device and a display device. The HMI device 700 may include a touchscreen display. The HMI device 700 displays a capacity retention rate (so-called State of Health (SOH)) of the battery 100, calculated by calculation processing described later.

The ECU 800 is an example of "control device" in the present disclosure. The ECU 800 includes a central processing unit (CPU) 801 and memory 802. The memory 802 includes read-only memory (ROM), random access memory (RAM). The ECU 800 controls each piece of equipment based on signals from various sensors, and maps and programs stored in the memory 802, such that the vehicle 1 is in a desired state. The ECU 800 executes charging control to limit charging power supplied to the battery 100, such that the charging power supplied to the battery 100 does not exceed an upper limit value that is set in advance. Also, the ECU 800 executes calculation processing for calculating a full charge capacity of the battery 100.

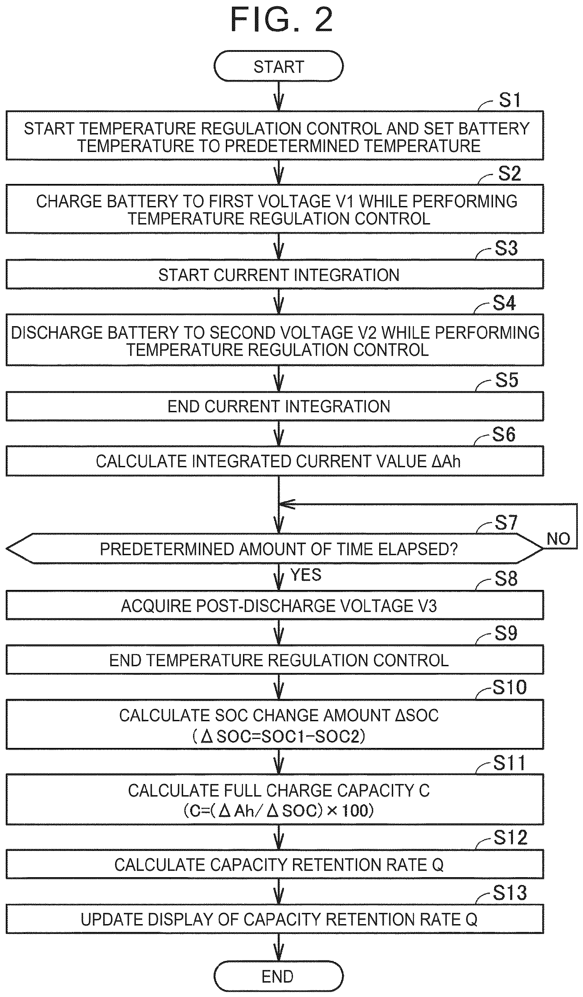

FIG. 2 is a flowchart showing calculation processing executed by the ECU 800. The calculation processing is executed when a predetermined condition is met. As an example, the predetermined condition is that the connector 6 is inserted into the inlet 300 and also that a battery diagnostic mode button is pressed. The battery diagnostic mode is a mode in which the full charge capacity and the capacity retention rate of the battery 100 are calculated. Each step (hereinafter abbreviated to "S") included in this flowchart is basically realized by software processing by the ECU 800, but may also be realized by dedicated hardware (electrical circuitry) fabricated within the ECU 800.

First, in S1, the ECU 800 starts temperature regulation control to set the temperature of the battery 100 to a predetermined temperature. Temperature regulation control is control in which the adjusting device 600 is operated to maintain the temperature of the battery 100 at the predetermined temperature. That is to say, the temperature regulation control is control in which the temperature of the battery 100 is maintained at the predetermined temperature by the adjusting device 600. The predetermined temperature is a temperature within an ideal usage temperature range for the battery 100. In the present embodiment, the predetermined temperature is 25 °C. Note that the predetermined temperature may be a temperature within a predetermined range of the ideal usage temperature range of the battery 100, such as 24.5 °C to 25.5 °C.

Next, in S2, the ECU 800 charges the battery 100 to a first voltage V1 using the power of the external power source 3 supplied from the power supply facility 2 while performing temperature regulation control. That is to say, the ECU 800 charges the battery 100 to the first voltage V1 by standard charging while maintaining the temperature of the battery 100 at the predetermined temperature.

In the present embodiment, the first voltage V1 is the voltage of the battery 100 when the battery 100 is in a fully charged state. That is to say, in the present embodiment, the first voltage V1 is the voltage of the battery 100 when a State of Charge (SOC) of the battery 100 is 100%. The voltage of the battery 100 when the battery 100 is in a fully charged state is set in advance in accordance with the type, characteristics, and so forth, of the battery 100, and hardly changes at all even when the battery 100 deteriorates.

Next, in S3, the ECU 800 starts current integration of the battery 100. Next, in S4, the ECU 800 discharges the battery 100 to the stationary power storage device 4 while performing the temperature regulation control, thereby discharging the battery 100 from the first voltage V1 to a second voltage V2. That is to say, the ECU 800 discharges the battery 100 while maintaining the temperature of the battery 100 at a predetermined temperature, thereby lowering the voltage of the battery 100 to the second voltage V2. S4 is discharged by Constant Current-Constant Voltage (CC-CV).

The second voltage V2 is lower than the first voltage V1. The second voltage V2 is determined by prior experimentation, taking into consideration the time required for discharging in S4, and reliability of full charge capacity C calculated in S11, which will be described later. In the present embodiment, the second voltage V2 is 90% of the first voltage V1.

Next, in S5, the ECU 800 ends the current integration of the battery 100. Next, in S6, the ECU 800 calculates an integrated value of the discharge current of the battery 100, over a period from the start to the end of the discharging in S4 (hereinafter referred to as "integrated current value ΔAh"). The unit of the integrated current value ΔAh is Ah. The ECU 800 calculates the integrated current value from the start of current integration (S3) to the end of current integration (S5), and sets this integrated current value as the integrated current value ΔAh.

Next, in S7, the ECU 800 determines whether a predetermined amount of time has elapsed since the discharging in S4 was completed (i.e., since the battery 100 was discharged to the second voltage V2). The ECU 800 does not charge or discharge the battery 100 until a predetermined amount of time has elapsed since the discharging in S4 was completed. When the predetermined amount of time has elapsed since the discharging in S4 was completed (YES in S7), the ECU 800 advances the processing to S8. When the predetermined amount of time has not elapsed since the discharging in S4 was completed (NO in S7), the ECU 800 repeats S7. The predetermined amount of time is time required to resolve polarization of the secondary batteries included in the battery 100, and is determined by prior experimentation. In the present embodiment, the predetermined amount of time is six hours.

In S8, the ECU 800 acquires, from the voltage sensor 501, a post-discharge voltage V3, which is the voltage of the battery 100 when the predetermined amount of time elapsed since the discharging in S4 was completed (i.e., since battery 100 was discharged to second voltage V2). That is to say, in the present embodiment, instead of using an estimated value as the post-discharge voltage V3, the value actually detected by the voltage sensor 501, when the predetermined amount of time has elapsed since the battery 100 was discharged to the second voltage V2, is used.

Next, in S9, the ECU 800 ends the temperature regulation control. Next, in S10, the ECU 800 calculates the amount of change in the SOC due to the discharging in S4 (hereinafter referred to as "SOC change amount ΔSOC"). Specifically, the ECU 800 sets a difference between the SOC at the start of discharging in S4 (hereinafter referred to as "SOC1") and the SOC after discharging (hereinafter referred to as "SOC2") as the SOC change amount ΔSOC. That is to say, the SOC change amount ΔSOC is calculated using the following Expression 1.$Δ SOC = SOC 1 - SOC 2$ Expression 1

In the present embodiment, the first voltage V1 is the voltage of the battery 100 when the battery 100 is in a fully charged state, and therefore the SOC1 is 100%. The SOC2 is identified based on the post-discharge voltage V3 and a map that indicates correlative relation between the SOC and open-circuit voltage (OCV) (e.g., an SOC-OCV curve). Specifically, the ECU 800 identifies the SOC corresponding to the post-discharge voltage V3 as the SOC2 in the map indicating the correlative relation between the SOC and the OCV. The map indicating the correlative relation between the SOC and the OCV is stored in the memory 802.

Note that when the first voltage V1 is the voltage of the battery 100 when the battery 100 is not in a fully charged state, the ECU 800 calculates an estimated value of the OCV from the first voltage V1, and identifies the SOC corresponding to the estimated value of the open circuit voltage as the SOC1 in the map indicating the correlative relation between the SOC and the OCV.

Next, in S11, the ECU 800 calculates the full charge capacity C of the battery 100 based on the integrated current value ΔAh calculated in S6 and the SOC change amount ΔSOC calculated in S10. Specifically, the ECU 800 calculates the full charge capacity C of the battery 100 using the following Expression 2.$C = \left(ΔAh/ΔSOC\right) \times 100$ Expression 2

Next, in S12, the ECU 800 calculates a capacity retention rate Q of the battery 100 based on a full charge capacity C0 of the battery 100 in an initial state and the full charge capacity C of the battery 100 calculated in S11. Specifically, the ECU 800 calculates the capacity retention rate Q of the battery 100 using the following Expression 3. The full charge capacity C0 of the battery 100 in the initial state is stored in the memory 802.$Q = C / C 0$ Expression 3

Next, in S13, the ECU 800 updates the capacity retention rate Q of the battery 100 displayed on the HMI device 700. After S13, the ECU 800 ends the calculation processing.

Thus, in the present embodiment, the ECU 800 charges the battery 100 to the first voltage V1 while maintaining the temperature of the battery 100 at the predetermined temperature, and then discharges the battery 100 to the second voltage V2 while maintaining the temperature of the battery 100 at the predetermined temperature. The ECU 800 acquires the post-discharge voltage V3, which is the voltage of the battery 100 when the predetermined amount of time has elapsed since the battery 100 was discharged to the second voltage V2, from the voltage sensor 501, and calculates the full charge capacity C of the battery 100 based on the post-discharge voltage V3. The precision of calculating the full charge capacity of a battery can deteriorate due to various factors, such as the environment when the state of the battery (e.g., voltage, current, SOC, etc.) is measured, and so forth. However, according to the present embodiment, the charging and discharging of the battery 100 that is necessary to calculate the full charge capacity C of battery 100 is performed in a state of maintaining the temperature of the battery 100 at the predetermined temperature, thereby improving the precision of calculating the full charge capacity C of battery 100.

Also, in the present embodiment, the post-discharge voltage V3 used to calculate the full charge capacity C is not an estimated value, but rather the value actually detected by the voltage sensor 501 when the predetermined amount of time has elapsed since the battery 100 was discharged to the second voltage V2. Thus, according to the present embodiment, the precision of calculating the full charge capacity C of the battery 100 is improved.

In the present embodiment, the first voltage V1 is the voltage of the battery 100 when the battery 100 is in a fully charged state. This improves the reliability of the SOC at the start of discharge (the above-mentioned SOC1) used to calculate the full charge capacity C of the battery 100, thereby improving the precision of calculation of the full charge capacity C of the battery 100.

In the present embodiment, the ECU 800 calculates the full charge capacity C of the battery 100 based on the first voltage V1, the post-discharge voltage V3, and the integrated current value ΔAh. In the present embodiment, instead of using an estimated value as the post-discharge voltage V3, the value actually detected by the voltage sensor 501, when the predetermined amount of time has elapsed since the battery 100 was discharged to the second voltage V2, is used. Also, the time required to resolve polarization of the secondary batteries included in the battery 100 is set as the predetermined amount of time. That is to say, in the present embodiment, the post-discharge voltage V3 can be said to represent the actual voltage of the battery 100 after polarization is resolved. According to the present embodiment, the full charge capacity C of the battery 100 is calculated based on the actual voltage of the battery 100 after polarization is resolved, and accordingly the precision of calculating the full charge capacity C of the battery 100 is improved.

In the present embodiment, the ECU 800 charges the battery 100 using power supplied from the power supply facility 2 in S2, and discharges the battery 100 to the stationary power storage device 4 in S4. According to the present embodiment, the battery 100 is discharged to the stationary power storage device 4 in S4, and accordingly the discharged power of the battery 100 can be effectively utilized.

In the present embodiment, the ECU 800 calculates the capacity retention rate Q of the battery 100 using the full charge capacity C calculated in S11. Thus, according to the present embodiment, the calculation precision of the capacity retention rate Q is also improved. Therefore, the value of the vehicle 1 in a second-hand market can be comprehended.

### First Modification

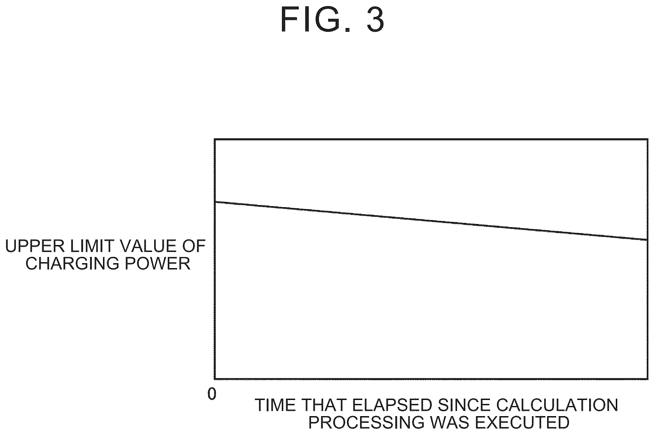

FIG. 3 is a diagram showing changes in an upper limit value of charging power used in charging control. In FIG. 3, the horizontal axis indicates the time that elapsed since the calculation processing was performed, and the vertical axis indicates the upper limit value of the charging power used in the charging control. As described above, the ECU 800 executes charging control to limit the charge power supplied to the battery 100 such that the charge power supplied to the battery 100 does not exceed an upper limit value set in advance. The reliability of the full charge capacity C of the battery 100 calculated by the calculation processing decreases as the time that elapsed since the calculation processing was executed becomes longer. Accordingly, as shown in FIG. 3, the ECU 800 may lower the upper limit value of the charging power used in the charging control as the time that elapsed since the calculation processing was executed becomes longer. This enables overcharging of the battery 100 to be suppressed.

### Second Modification

The reliability of the full charge capacity C of the battery 100 calculated by the calculation processing decreases as the time that elapsed since the calculation processing was executed becomes longer. Also, the reliability of the full charge capacity C of the battery 100 calculated by the calculation processing decreases as the distance traveled since the calculation processing was executed becomes longer. Accordingly, the HMI device 700 may display the time that elapsed since the calculation processing was executed, or the distance traveled since the calculation processing was executed, along with the capacity retention rate Q of the battery 100. This enables the user to estimate the reliability of the capacity retention rate Q of the battery 100 displayed on the HMI device 700.

### Third Modification

The battery diagnostic mode may include a first mode and a second mode, and the user may be able to select which of the first mode and the second mode to use in order to calculate the full charge capacity C and the capacity retention rate Q of the battery 100.

The first mode is a mode in which the above-described calculation processing is executed. As described above, in the calculation processing, the post-discharge voltage V3 used to calculate the full charge capacity C is not an estimated value, but rather the value actually detected by the voltage sensor 501 when the predetermined amount of time has elapsed since the battery 100 was discharged to the second voltage V2 is used. In contrast, in the second mode, an estimated value of the post-discharge voltage V3 is used as the post-discharge voltage V3 used to calculate the full charge capacity C.

Specifically, in the second mode, the ECU 800 first executes S1 to S6. In the second mode, after S6, the ECU 800 advances the processing to S8 without executing S7. In S8 of the second mode, the ECU 800 acquires the voltage of the battery 100 at the end of the discharging in S4 (i.e., at end of discharging when the battery 100 is discharged to the second voltage V2) from the voltage sensor 501, and calculates an estimated value of the post-discharge voltage V3 based on the voltage of the battery 100 at the end of discharging in S4, and the polarization characteristics. In the second mode, following S8, the ECU 800 also executes S9 through S13 to calculate the full charge capacity C and the capacity retention rate Q of the battery 100.

In this way, in the first mode, the value actually detected by the voltage sensor 501, when the predetermined amount of time has elapsed since the battery 100 was discharged to the second voltage V2, is used to calculate the full charge capacity C of the battery 100. In contrast, in the second mode, the full charge capacity C of the battery 100 is calculated using an estimated value of the post-discharge voltage V3. Accordingly, there are cases in which the calculation precision of the full charge capacity C and the capacity retention rate Q is lower in the second mode than in the first mode. However, in the second mode, S7 is not executed, and thus the full charge capacity C of the battery 100 can be calculated in a shorter time in the second mode than that in the first mode. In the third modification, the user can select which of the first mode and the second mode to use. That is to say, according to the third modification, the user can select whether to prioritize the precision of calculating the full charge capacity C and the capacity retention rate Q, or the amount of time required for calculation thereof, depending on the situation, thereby broadening the freedom of selection of the user.

### Fourth Modification

The vehicle 1 may include another battery in addition to battery 100, and in S4, the ECU 800 may perform discharging from the battery 100 to the other battery. The other battery is charged by the power supplied from the battery 100. The other battery may store power for driving the MG 201, or may store power for driving auxiliary devices (omitted from illustration) installed in the vehicle 1. According to the fourth modification, in S4, the battery 100 is discharged to the other battery provided in the vehicle 1, and accordingly the discharged power of the battery 100 can be effectively utilized in the vehicle 1.

### Fifth Modification

When the vehicle 1 is capable of rapid charging, in which the battery 100 is charged with direct current power supplied from an external power source, the battery 100 may be charged by rapid charging in S2.

The embodiment and the modifications disclosed herein should be considered to be exemplary in all respects and not restrictive. The scope of the present disclosure is defined by the claims rather than by the above description, and is intended to include all modifications within the meaning and scope equivalent to those of the claims.

## Claims

1. A vehicle comprising:
a power storage device;
an adjusting device for adjusting a temperature of the power storage device;
a voltage sensor for detecting a voltage of the power storage device; and
a control device that executes calculation processing to calculate a full charge capacity of the power storage device, wherein
the calculation processing includes
charging the power storage device to a first voltage while performing temperature regulation control to maintain the temperature of the power storage device at a predetermined temperature by the adjusting device,
discharging the power storage device to a second voltage while performing the temperature regulation control, after charging the power storage device to the first voltage,
acquiring, from the voltage sensor, a post-discharge voltage that is a voltage of the power storage device when a predetermined amount of time elapsed since the power storage device was discharged to the second voltage, and
calculating the full charge capacity of the power storage device based on the post-discharge voltage.

2. The vehicle according to claim 1, wherein the first voltage is a voltage of the power storage device when the power storage device is in a fully charged state.

3. The vehicle according to claim 1 or 2, wherein
the calculating of the full charge capacity of the power storage device in the calculation processing includes
calculating an integrated value of a discharge current of the power storage device over a period from start to end of discharging when the power storage device is discharged to the second voltage while performing the temperature regulation control, in the calculation processing, and
calculating the full charge capacity of the power storage device based on the first voltage, the post-discharge voltage, and the integrated value.

4. The vehicle according to claim 1 or 2, wherein
the vehicle is configured to be connectable to a power supply facility that is connected to a stationary power storage device,
charging the power storage device to the first voltage in the calculation processing includes charging the power storage device using power supplied from the power supply facility, and
discharging the power storage device to the second voltage in the calculation processing includes discharging the power storage device to the stationary power storage device.

5. The vehicle according to claim 1 or 2, wherein
the control device is configured to
further execute charging control to limit charging power to the power storage device, such that the charging power does not exceed an upper limit value that is set in advance, and
lower the upper limit value as time that elapsed since the calculation processing was executed becomes longer.
